# EUROPEAN PATENT APPLICATION

(11) **EP 4 071 086 A1**
(43) Date of publication of application: **12.10.2022**
(21) Application number: 21854858.4
(22) Date of filing: 14.01.2021
(51) Int. Cl.: B65F 1/14, B65F 1/06, B65B 9/10

(54) **GARBAGE CAN, CAN COVER, AND ROTARY PACKING MECHANISM**

(71) Applicant: Shenzhen Easehold Technology Co., Ltd., Shenzhen (CN)
(72) Inventor: Yao, Aiping, Hunan 413516 (CN)
(74) Representative: Zaboliene, Reda
(86) International application number: PCT/CN2021/071632
(87) International publication number: WO 2022/151117

(57) **Abstract**

The present disclosure relates to a garbage bin, a bin lid, and a rotary packing mechanism for garbage bin. The rotary packing mechanism for garbage bin comprises an annular storage box for storing garbage bags and allowing the stored garbage bags to expand downwards, and a rotary driving device for driving the storage box to rotate, wherein a throw opening is formed at the middle of the storage box for throwing the garbage into the garbage bag. The rotation of the storage box makes the garbage bag that is expanded downwards and stored with garbage rotate, whose upper end is twisted and sealed. The rotary packing mechanism twists the seal in a manner of rotating the storage box, the seal is tighter, the garbage inside is not easy to leak, and the seal is small, which is conductive for subsequent automatic cuttings.

## Description

### TECHNICAL FIELD

The present disclosure relates to a garbage bin, and in particular to a garbage bin, a bin lid, and a rotary packing mechanism.

### RELATED ART

When a garbage bag within an intelligent garbage bin in the related art is sealed, a cutting mechanism is usually used for sealing and cutting simultaneously, the seal is large and a longer cutting member is required by this way. In addition, the seal is untight, and garbage inside is easy to leak.

### SUMMARY

In view of the above-mentioned disadvantages of the prior art, the technical problem to be solved by the present disclosure is to provide a garbage bin, a bin lid, and a rotary packing mechanism.

The technical problem solved by the present disclosure is to provide a rotary packing mechanism for garbage bin, comprising an annular storage box for storing garbage bags and allowing the stored garbage bags to expand downwards, and a rotary driving device for driving the storage box to rotate, wherein a throw opening is formed at the middle of the storage box for throwing the garbage into the garbage bags; the rotation of the storage box makes the garbage bag that is expanded downwards and stored with garbage rotate, whose upper end is then twisted and sealed.

Preferably, the rotary drive device comprises a rotatable drive member for driving the storage box to rotate when the drive member rotates.

Preferably, the drive member is an annular drive disk which is configured as rotatable and circumferentially positioned on the storage box.

Preferably, the drive disk and the storage box are arranged concentrically, and the drive disk is engaged with the storage box.

Preferably, the drive disk comprises an annular gear ring, and the storage box is located on an inner ring of the gear ring.

Preferably, the drive disk further comprises a positioning portion arranged on the inner ring of the gear ring, and the positioning portion is provided with an engagement portion for engaging with the storage box.

Preferably, the positioning portion is arranged along an inner circumference of the gear ring, and the storage box is placed on the positioning portion. The engagement portion is a boss protruding upwards on a side for positioning, and grooves are provided at the bottom of the storage box for inserting the boss.

Preferably, the rotary driving device further comprises a rotary motor for driving the drive member to rotate.

A bin lid of garbage bin, comprising the above rotary packing mechanism.

A garbage bin, comprising a bin body, and the above rotary packing mechanism arranged above an upper end of the bin body.

### BRIEF DESCRIPTION OF THE DRAWINGS

The present disclosure will be further described below in combination with the accompanying drawings and embodiments.
Fig. 1 is a schematic structure view of a garbage bin according to an embodiment of the present disclosure;
Fig. 2 is a schematic structure view when a bin lid of the garbage bin in Fig. 1 is opened;
Fig. 3 is a schematic structure view when a lid body of the bin lid in Fig. 1 is opened;
Fig. 4 is a schematic view when a blowing-expanding mechanism of the bin lid in Fig. 2 blows air to expand a garbage bag;
Fig. 5 is an exploded schematic view of the blowing-expanding mechanism of the lid body of the bin lid in Fig. 3;
Fig. 6 is a perspective schematic view of an automatic cutting mechanism of the bin lid in Fig. 2 when a first cutting assembly is separated from a second cutting assembly;
Fig. 7 is a schematic view when the rotating packing mechanism twists a garbage bag seal after the garbage bag in Fig. 4 is filled with garbage;
Fig. 8 is an exploded schematic view of the rotary packing mechanism and the automatic cutting mechanism in Fig. 6;
Fig. 9 is an exploded schematic view of the rotary packing mechanism and the automatic cutting mechanism in Fig. 8 from another angle;
Fig. 10 is a sectional schematic view of the automatic cutting mechanism in Fig. 7, wherein the first cutting assembly and the second cutting assembly are approached to cut.

### PREFERRED EMBODIMENTS OF THE PRESENT DISCLOSURE

In order to make the technical features, objectives and beneficial effects of the disclosure more obvious and understandable, the specific embodiments of the present disclosure will be described in detail with reference to the accompanying drawings hereafter.

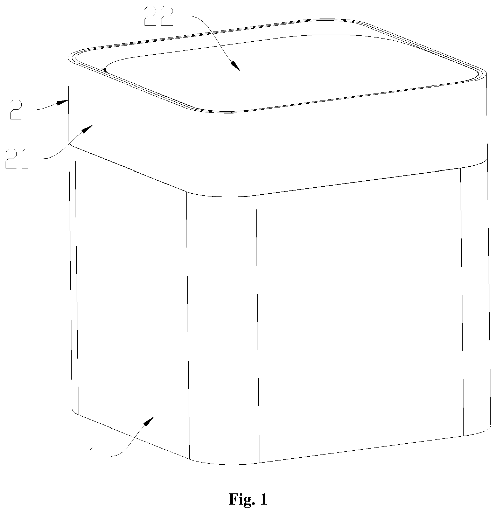

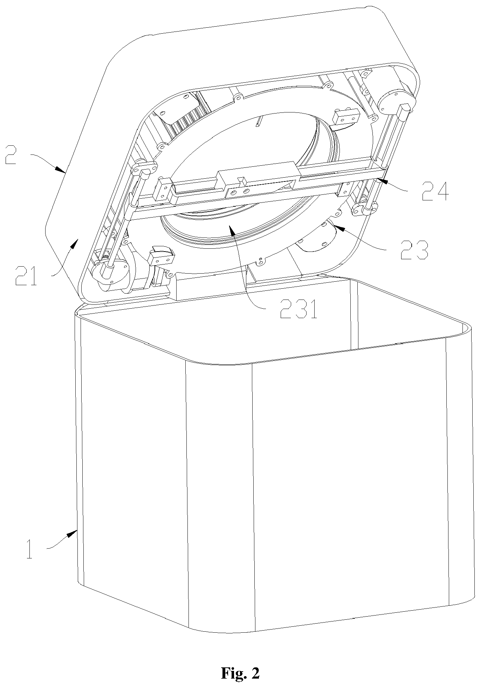

As shown in Figs. 1 and 2, in a preferred embodiment of the present invention, a garbage bin comprises a bin body 1 and a bin lid 2. Preferably, the bin lid 2 is rotatably arranged on the bin body 1 so as to take out the garbage after being opened.

The bin lid 2 can be integrated with a complete processing actions of garbage bags, such as storing a garbage bag 3, expanding the garbage bag 3, packing the garbage bag 3, and cutting the garbage bag 3, which are basically automated.

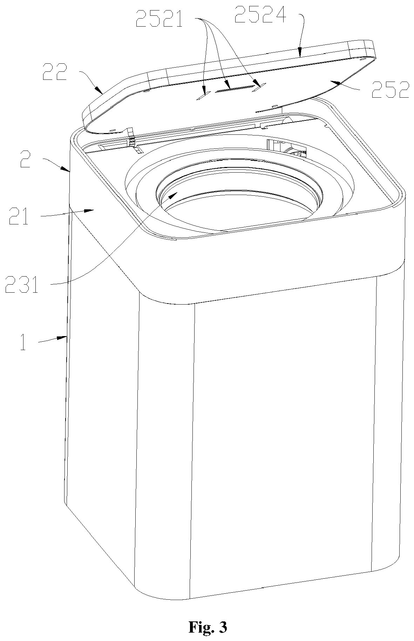

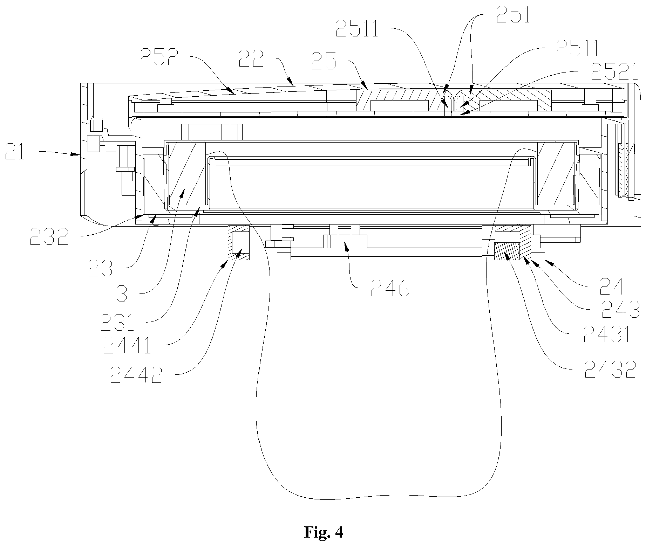

As shown in Figs. 3 and 4, the bin lid 2 comprises a main body 21 and a lid body 22 rotatably arranged on an upper side of the main body 21, wherein the main body 21 is provided with a rotary packing mechanism 23 and an automatic cutting mechanism 24. The lid body 22 is provided with a blowing-expanding mechanism 25 used for blowing air to the garbage bag 3 opened on an annular storage box 231 of the rotary packing mechanism 23 after the lid body 22 is rotated to the main body 21.

The garbage bag 3 has a long cylindrical shape as a whole after being expanded, and circumference of the garbage bag 3 is placed along the storage box 231 after being axially shrank, and a bottom of a seal of the garbage bag 3 is located at the middle of the storage box 231. The garbage bag 3 can be cut into several bag bodies to realize continuous packing, placement and expansion of the garbage bag 3. A throw opening is formed at the middle of the storage box 231 for throwing the garbage into the garbage bag 3.

The annular storage box 231 is used for storing the garbage bags 3 and allows the garbage bags 3 to expand downwards, the blowing-expanding mechanism 25 makes the garbage bags 3 within the storage box 231 to be expanded to the bin body 1, the garbage bag 3 with stored garbage is rotated and packed by the rotary packing mechanism 23, and the seal of the packed garbage bag 3 is cut by the automatic cutting mechanism 24.

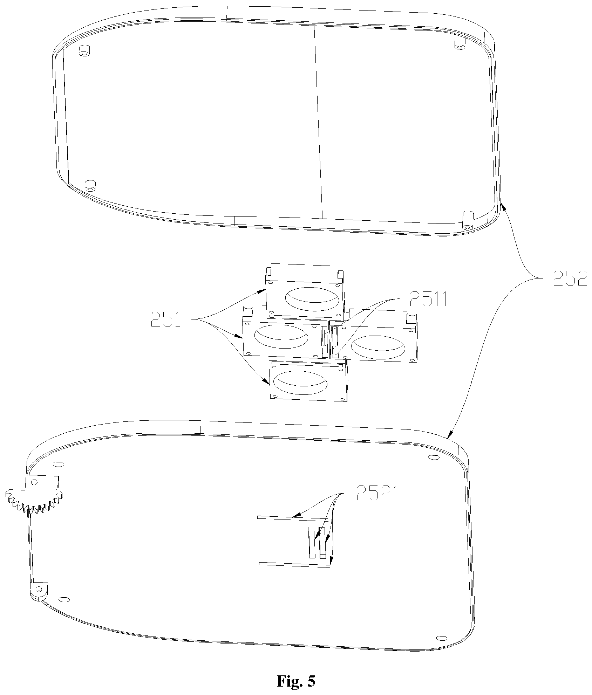

As shown in Figs. 3 to 5, the blowing-expanding mechanism 25 for garbage bag is generally arranged above the storage box 231 and comprises an air blowing member 251 for blowing air to the garbage bag 3 that is open on an upper end of the bin body 1 of the garbage bin, so as to make the garbage bag 3 expand downwards onto inner wall of the bin body 1 of the garbage bin.

The air blowing member 251 is located above an upper side of the storage box 231, and a blowing direction of the air blowing member 251 is corresponding to an inner circle of the storage box 231. Once the blowing-expanding mechanism 25 for garbage bag blows air downwards, a bottom of the garbage bag 3 is expanded onto inner wall of the bin body 1, and the inner ring of the storage box 231 at the upper end can be used as a throwing port for throwing the garbage into the garbage bin.

The garbage bag is expanded in the manner of the blowing-expanding mechanism blowing air, which expanding method is smart and quick. The new garbage bag has not been placed and touched with garbage, which is clean and hygienic, and there will be no peculiar smells flowing during the blowing process, which can reduce the peculiar smells in the environment.

An air outlet 2511 of the air blowing member 251 has a long strip shape, which can increase a blowing radiation range of the garbage bag 3.

The blowing-expanding mechanism 25 further comprises a blast chamber 252, the air blowing member 251 is arranged within the blast chamber 252, and the blast chamber 252 is provided with air inlets 2524 for air entering and air blowing ports 2521 for blowing out the air sent by the air blowing member 251.

The air blast chamber 252 comprises a lower cover 2522 and an upper cover 2523, the air inlets 2524 are formed on a mating surface of the upper cover 2523 and the lower cover 2522, and the air blowing port 2521 are formed on the lower cover 2522.

The blast chamber 252 is rotatably arranged, so that the lid body 22 drives the entire blowing-expanding mechanism 25 to turn over, thus the garbage can be placed into the garbage bin when the lid body 22 is opened, and the garbage bag 3 can be blew to expand when the lid body 22 is closed.

The air blowing ports 2521 face to the air outlets 2511, and shapes of the air blowing ports 2521 are not smaller than that of the air outlets 2511.

Furthermore, a plurality of air blowing members 251 are provided within the blast chamber 252, and a plurality of air blowing ports 2521 respectively corresponding to the air outlets 2511 of each of the air blowing members 251 are provided on the blast chamber 252, so that the air sent by each of the air blowing members 251 is blew out through the air outlets 2521.

Furthermore, the air outlet 2511 of each of the air blowing members 251 is arranged in sequence from end to end to form a semi-closed shape, or a closed shape; or the air outlet 2511 of each of the air blowing members 251 is arranged in the same direction in sequence to form a line shape etc.

When the bin lid 2 is closed, the blowing-expanding mechanism 25 blows air into the storage box 231 to expand the garbage bag 3 downwards to fit with inner walls of the bin body 1 of the garbage bin. The lid body 22 can be turned over and opened to dump garbage into the garbage bag 3.

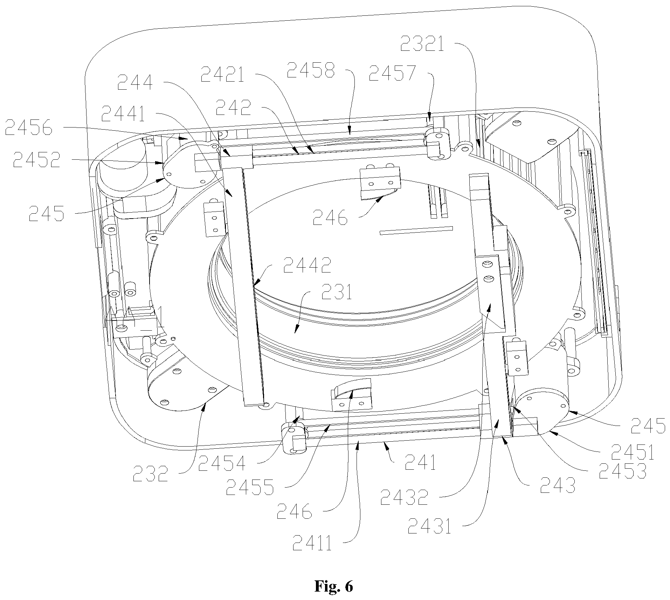

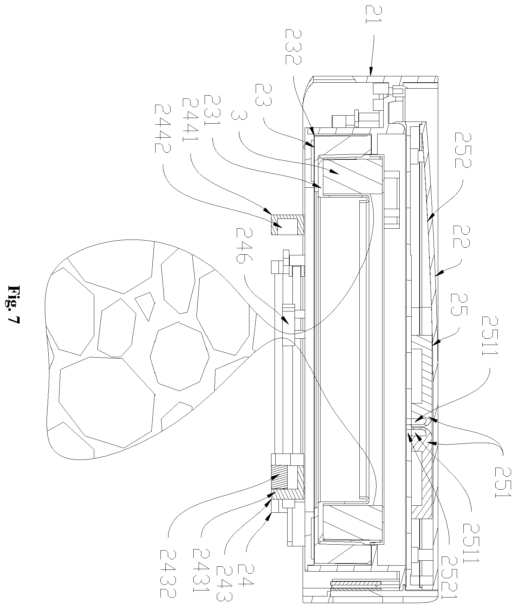

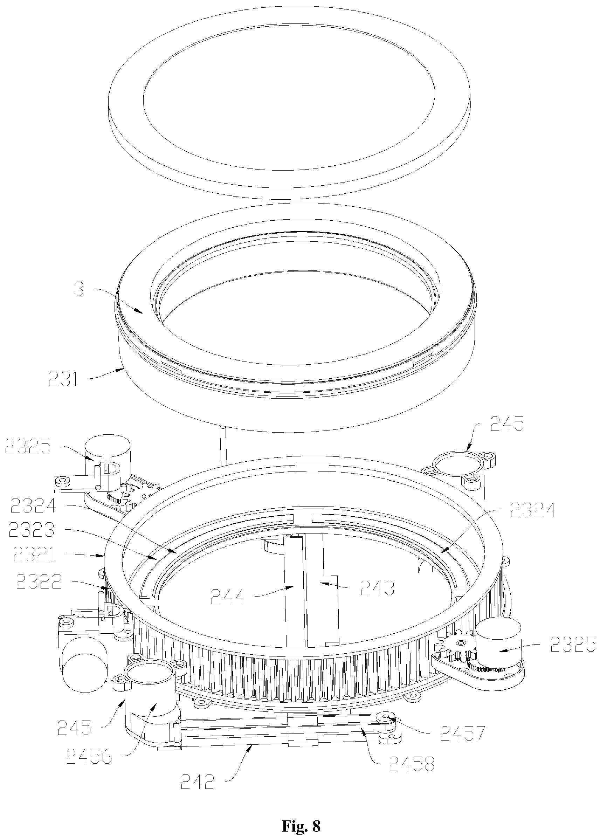

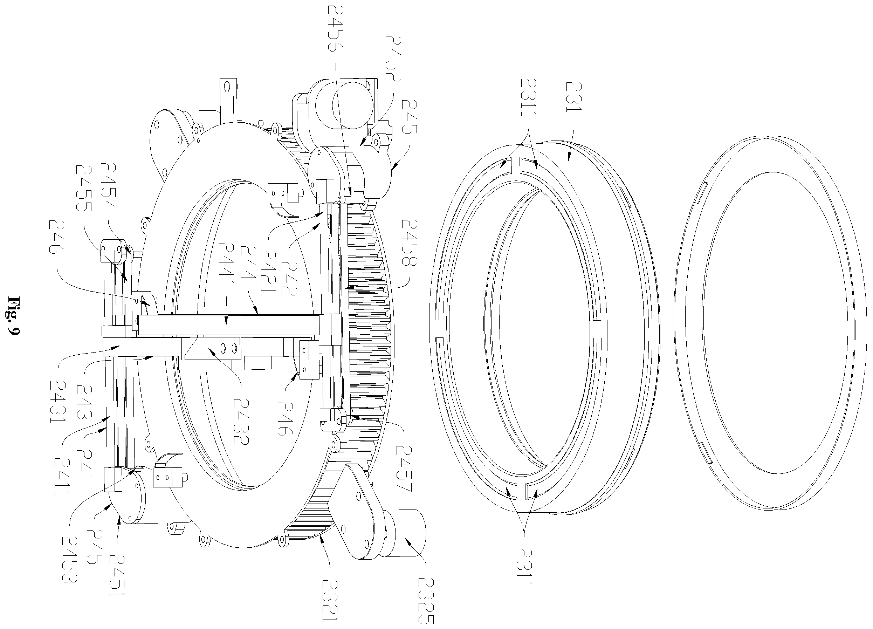

As shown in Figs. 6 to 9, when the garbage bag 3 is full and needs to be packed and taken out, the rotary packing mechanism 23 can be started up. The rotary packing mechanism 23 comprises a rotary driving device 232 for driving the storage box 231 to rotate. The rotary driving device 232 interacts with the storage box 231 to make the storage box 231 and the garbage bags 3 within the storage box 231 rotate relative to the garbage bag 3 with stored garbage. The rotation of the storage box 231 makes the garbage bag 3 that is expanded downwards and stored with garbage rotate, whose upper end is then twisted and sealed.

The rotary driving device drives the storage box to rotate to twist and seal, so the seal is tighter, the garbage inside is not easy to leak, and the seal is small, which is conducive for subsequent automatic cuttings.

The rotary driving device 232 comprises a rotatable drive member 2321 for driving the storage box 231 to rotate when the drive member 2321 rotates. Furthermore, the drive member 2321 is an annular drive disk which is configured as rotatable and circumferentially positioned on the storage box 231. When the drive disk rotates, the storage box 231 is driven to rotate, thus to twist relative to the underneath garbage bag 3 with stored garbage.

Furthermore, the drive disk and the storage box 231 are arranged concentrically, the drive disk is engaged with the storage box 231, so that the storage box 231 is driven to rotate when the drive disk rotates.

In some embodiments, the drive disk comprises an annular gear ring 2322, teeth are arranged on an outer ring of the gear ring 2322, and the storage box 231 is located on an inner ring of the gear ring 2322.

The drive disk further comprises a positioning portion 2323 arranged on the inner ring of the gear ring 2322, and the positioning portion 2323 is provided with an engagement portion 2324 for engaging with the storage box 231.

In this embodiment, the positioning portion 2323 is ring-shaped and arranged along an inner circumference of the gear ring 2322, the storage box 231 is placed on the positioning portion 2323, and the engagement portion 2324 is a boss protruding upwards on a side for positioning, and grooves 2311 are provided at the bottom of the storage box 231 for inserting the boss.

A plurality of engagement portions 2324 are provided along the circumference of the positioning portion 2323 for engaging with each of the grooves 2311 at the bottom of the storage box 231 to rotate synchronously. In other embodiments, an engagement position of the drive disk and the storage box 231 can also be located on an inner wall of the gear ring 2322 and an outer wall of the storage box 231, or teeth or other structures are directly arranged on the circumference of the storage box 231, so that the rotary driving device 232 drives the storage box 231 to rotate directly.

Generally, the rotary driving device 232 further comprises a rotary motor 2325 for driving the drive member 2321 to rotate, and a gear set for transmitting outputs of the rotary motor 2325.

After the garbage bag 3 with stored garbage is twisted and sealed, it needs to be cut apart from the garbage bag 3 within the storage box 231 for next garbage storage.

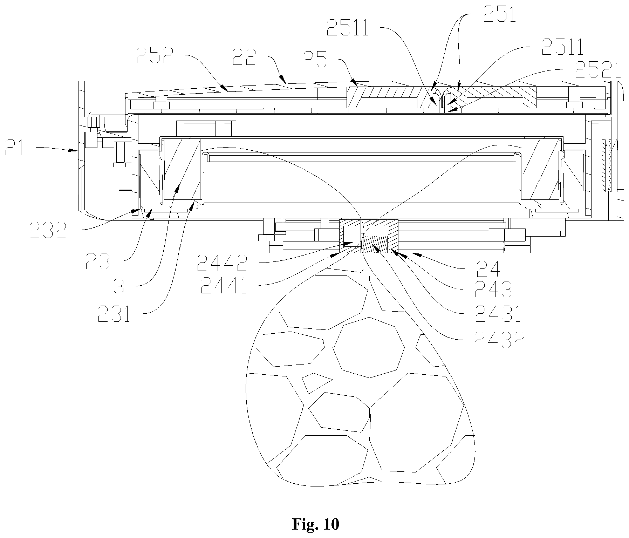

As shown in Fig. 6, Fig. 9, and Fig. 10, the automatic cutting mechanism 24 comprises a first guiding assembly 241, a second guiding assembly 242, a first cutting assembly 243, a second cutting assembly 244, and a cutting drive device 245. The cutting drive device 245 drives the first cutting assembly 243 to move back and forth along the first guiding assembly 241 and drives the second cutting assembly 244 to move back and forth along the second guiding assembly 242.

The first cutting assembly 243 and the second cutting assembly 244 are approached and moved away from each other when moving forth and back; when approaching to each other, the twisted seal at the upper end of the garbage bag 3 is clamped and cut, and after moving away from each other, a space is left for the new garbage bag 3 at the upper end to expand downwards.

The automatic cutting mechanism clamps the twisted and sealed position, a size required to be heated will be very short, the required heat is little, and the power consumption is low, thus the environmental protection has been improved.

The first guiding assembly 241 and the second guiding assembly 242 respectively comprise a first guiding rail 2411 and a second guiding rail 2421 arranged side by side at intervals. The first cutting assembly 243 is extended from the first guiding rail 2411 to the second guiding rail 2421, and the second cutting assembly 244 is extended from the second guiding rail 2421 to the first guiding rail 2411, thus the first cutting assembly 243 and the second cutting assembly 244 are arranged in parallel.

The first cutting assembly 243 comprises a first support 2431 slidably matched with the first guiding rail 2411, and the second cutting assembly 244 comprises a second support 2441 slidably matched with the second guiding rail 2421. At least one of the first support 2431 and the second support 2441 is provided with a cutting member 2432, after the first cutting assembly 243 and the second cutting assembly 244 are approached to each other, the cutting member 2432 cuts the sealed position.

The cutting member 2432 is detachably arranged on the first support 2431 and faces to the second support 2441, and the second support 2441 is provided with an avoiding slot 2442 corresponding to the cutting member 2432. After the garbage bag 3 is twisted and sealed, the sealed position is just corresponding to the position of the cutting member 2432. After the first cutting assembly 243 and the second cutting assembly 244 are approached, the cutting member 2432 abuts on the twisted seal and then cuts it apart.

Furthermore, the cutting member 2432 is a hot melt head electrically connected to a power supply, once the seal is clamped, the hot melt head is energized to heat up, so as to fuse and cut the sealed position.

The automatic cutting mechanism 24 further comprises a position switch 246 for setting the position of the first cutting assembly 243 and the second cutting assembly 244 when they are approached, thus the first cutting assembly 243 and the second cutting assembly 244 stop moving after approaching to each other and clamping the seal, and then the cutting member 2432 is electrically connected to the power supply for generating heat to fuse the twisted seal.

The cutting drive device 245 comprises a first drive assembly 2451 and a second drive assembly 2452 for driving the first cutting assembly 243 and the second cutting assembly 244 to move back and forth, respectively.

The first drive assembly 2451 comprises a first driving wheel 2453 and a first driven wheel 2454 respectively arranged at both ends of the first guiding rail 2411, and a first transmission belt 2455 wound between the first driving wheel 2453 and the first driven wheel 2454. The first transmission belt 2455 is connected to the first support 2431, the first driving wheel 2453 rotates and drives the first transmission belt 2455 to rotate, so that the first transmission belt 2455 drives the first support 2431 to slide along the first guiding rail 2411.

Furthermore, the first drive assembly 2451 further comprises a first motor, and a first gear set respectively mashed with the first driving wheel 2453 and the first motor, so the first motor drives the first driving wheel 2453 to rotate.

The second drive assembly 2452 comprises a second driving wheel 2456 and a second driven wheel 2457 respectively arranged at both ends of the second guiding rail 2421, and a second transmission belt 2458 arranged between the second driving wheel 2456 and the second driven wheel 2457. The second transmission belt 2458 is connected with the second support 2441, the second driving wheel 2456 rotates and drives the second transmission belt 2458 to rotate, so that the second transmission belt 2458 drives the second support 2441 to slide along the second guiding rail 2421.

Furthermore, the second drive assembly 2452 further comprises a second motor, and a second gear set respectively meshed with the second driving wheel 2456 and the second motor, so the second motor drives the second driving wheel 2456 to rotate.

It can be understood that the above technical features can be used in any combinations without limitations.

The above description is only the preferred embodiments of the present disclosure and does not limit the patent scope of the present disclosure, any equivalent structures or equivalent process modifications used based on the contents of the specification and accompanying drawings in the present disclosure, no matter whether it is directly or indirectly used in any other related technical field, should be included within the protection scope of the present disclosure.

### INDUSTRIAL APPLICABILITY

The garbage bin, the bin lid and the blowing-expanding mechanism of the present disclosure have the following beneficial effects: the rotary packing mechanism twists the seal in a manner of rotating the storage box, the seal is tighter, the garbage inside is not easy to leak, and the seal is small, which is conductive for subsequent automatic cuttings.

## Claims

1. A rotary packing mechanism for garbage bin, comprising an annular storage box (231) for storing garbage bags (3) and allowing the stored garbage bags (3) to expand downwards, and a rotary driving device (232) for driving the storage box (231) to rotate, wherein a throw opening is formed at the middle of the storage box (231) for throwing the garbage into the garbage bags (3); the rotation of the storage box (231) makes the garbage bag (3) that is expanded downwards and stored with garbage rotate, whose upper end is then twisted and sealed.

2. The rotary packing mechanism for garbage bin according to claim 1, wherein the rotary driving device (232) comprises a rotatable drive member (2321) for driving the storage box (231) to rotate when the drive member (2321) rotates.

3. The rotary packing mechanism for garbage bin according to claim 2, wherein the drive member (2321) is an annular drive disk which is configured as rotatable and circumferentially positioned on the storage box (231).

4. The rotary packing mechanism for garbage bin according to claim 3, wherein the drive disk and the storage box (231) are arranged concentrically, and the drive disk is engaged with the storage box (231).

5. The rotary packing mechanism for garbage bin according to claim 3, wherein the drive disk comprises an annular gear ring (2322), and the storage box (231) is located on an inner ring of the gear ring (2322).

6. The rotary packing mechanism for garbage bin according to claim 5, wherein the drive disk further comprises a positioning portion (2323) arranged on the inner ring of the gear ring (2322), and the positioning portion (2323) is provided with an engagement portion (2324) for engaging with the storage box (231).

7. The rotary packing mechanism for garbage bin according to claim 6, wherein the positioning portion (2323) is arranged along an inner circumference of the gear ring (2322), the storage box (231) is placed on the positioning portion (2323), and the engagement portion (2324) is a boss protruding upwards on a side for positioning, and grooves (2311) are provided at the bottom of the storage box (231) for inserting the boss.

8. The rotary packing mechanism for garbage bin according to claim 2, wherein the rotary driving device (232) further comprises a rotary motor (2325) for driving the drive member (2321) to rotate.

9. A bin lid (2) of garbage bin, comprising the rotary packing mechanism according to any one of claims 1 to 8.

10. A garbage bin, comprising a bin body (1), and the rotary packing mechanism (23) according to any one of claims 1 to 8 arranged at an upper end of the bin body (1).
